# EUROPÄISCHE PATENTSCHRIFT

(11) **EP 1 412 601 B1**
(45) Veröffentlichungstag und Bekanntmachung des Hinweises auf die Patenterteilung: **01.06.2005**
(21) Anmeldenummer: 02754431.1
(22) Anmeldetag: 25.07.2002
(51) Int. Cl.: E05D 3/06, E05D 11/00, B60R 21/34, B62D 25/12

(54) **DOPPELARMGELENKSCHARNIER FÜR DIE FRONTHAUBE EINES KRAFTFAHRZEUGES**
DUAL-ARM ARTICULATED HINGE FOR THE FRONT BONNET OF A MOTOR VEHICLE
CHARNIERE ARTICULEE A DEUX BRAS DESTINEE AU CAPOT AVANT D'UN VEHICULE AUTOMOBILE

(30) Priorität: 28.07.2001 DE 10136897
(43) Veröffentlichungstag der Anmeldung: 28.04.2004
(73) Patentinhaber: Adam Opel AG, 65423 Rüsselsheim (DE); Edscha AG, 42855 Remscheid (DE)
(72) Erfinder: KRETH, Laszlo, 64319 Pfungstadt (DE); RENNEISEN, Ingo, 65239 Hochheim (DE); POLZ, Andreas, 45883 Gelsenkirchen (DE); MROWKA, Peter, 42855 Remscheid (DE)
(74) Vertreter: Sparing, Rolf Klaus
(86) Internationale Anmeldenummer: PCT/DE2002/002727
(87) Internationale Veröffentlichungsnummer: WO 2003/012233

(56) Entgegenhaltungen:
- WO-A-00/69709

## Beschreibung

Die Erfindung betrifft ein Doppelarmgelenkscharnier nach dem Oberbegriff des Anspruchs 1.

Derartige Scharniere kommen in vielfältigen Formen zum Einsatz. Eine sehr prinzipielle Darstellung kann der DE 197 12 961 entnommen werden. Die unteren Enden der Arme sind mit einer Schiene an der Karosserie und die oberen Enden mit einer Schiene an der Fronthaube jeweils in Gelenken verbunden. Da die Arme unterschiedlich lang sind und die Gelenkpunkte oben und unten unterschiedliche Abstände aufweisen, wird die Fronthaube beim Aufklappen gleichzeitig nach oben und nach vorn versetzt. Anders ausgedrückt: Die Schwenkachse der Fronthaube durchläuft eine Bahn, die durch die Scharniergeometrie bestimmt ist.

Bei der Konstruktion eines Scharniers für eine Fronthaube ist außerdem darauf zu achten, dass die Fronthaube in einem bestimmten Maße nachgiebig gestaltet sein muss, damit ein Fußgänger, der vom Fahrzeug erfasst wird und mit seinem Körper und Kopf auf die Fronthaube schlägt, möglichst wenig verletzt wird. Die daraus resultierenden Vorgaben, die bei der Konstruktion zu berücksichtigen sind, werden in definierten Kopfaufschlagsimulationen überprüft. Bei diesen Versuchen wird die Verzögerung eines Simulationskopfes gemessen. Aus dem zeitlichen Ablauf der Verzögerung lässt sich der HIC-Wert ermitteln, dessen Definition der Fachliteratur entnommen werden kann und der nicht über 1.000 liegen sollte, um bestimmte Auflagen zu erfüllen.

Besonders kritisch sind Kopfaufschläge auf die Fronthaube im Bereich der Scharniere, da hier eine Anbindung der Fronthaube an die Karosserie vorliegt, die nicht ohne weiteres so nachgiebig gestaltet werden kann, dass der vorgegeben HIC-Wert unterschritten wird. In der schon genannten Offenlegungsschrift wird daher unterbreitet, die Schiene an der Karosserie als einen nach oben klappbaren Ausleger auszubilden. Der Ausleger wird mittels einer vorgespannten Feder im Falle einer drohenden Kollision mit einem Fußgänger keilartig nach oben aufgestellt. Dies verlängert zum einen den Weg, auf dem der aufschlagende Kopf seine Bewegungsenergie abbauen kann. Zum anderen wird durch die Federrate ziemlich genau der Widerstand bestimmt, der die Kopfverzögerung hervorruft. Problematisch ist allerdings, dass es äußerst schwierig ist sicherzustellen, dass die Fronthaube im richtigen Moment angehoben wird. Des weiteren ist eine Verzögerung, die einer Federkennung entspricht, nicht unbedingt optimal im Hinblick auf einen möglichst geringen HIC-Wert.

WO 00 69 709 A beschreibt ein Doppelarmgelenkscharnier, bei dem eine erste der Fronthaube zugeordnete Schiene und eine zweite der Karosserie zugeordnete Schiene über zwei Arme miteinander schwenkbar verbunden sind, wobei wenigstens einer der Arme zweiteilig derart ausgeführt ist, daß er zwei gelenkig miteinander verbundene, durch einen Scherstift gegenseitig gehaltene Streben aufweist, wobei im Falle einer Überlast durch einen Fußgängeraufprall der Scherstift bricht und die Schienen einander annähern. Um die Kraft auf eine der Streben einzuleiten, ist ein Druckstück vorgesehen.

Es ist die Aufgabe der Erfindung, ein Doppelarmgelenkscharnier nach dem Oberbegriff des Anspruchs 1 anzugeben, das unter Beibehaltung eines einfachen Scharnieraufbaus eine erhöhte Betriebssicherheit gewährleistet.

Diese Aufgabe wird erfindungsgemäß mit den Merkmalen des Anspruchs 1 gelöst.

Diese Anordnung hat den Vorteil, dass sie von einer besonderen Aktivierung des Schutzmechanismus, z. B. einer vorgespannten Feder, unabhängig ist. Der Schutzmechanismus ist vielmehr inhärent vorhanden und bedarf keiner störanfälligen und mit Unsicherheiten belasteten externen Auslösung.

Der auf diese Weise erzielte Verzögerungsverlauf bewirkt einen HIC-Wert unter 1.000. Zwar ergibt sich zunächst eine relativ große Verzögerung, bevor die Verbindung der Streben nachgibt, diese ist aber auf einen kurzen Zeitraum begrenzt und damit für den aufschlagenden Kopf erträglich. Danach gibt es eine Phase verminderter Verzögerung, wenn sich nach dem Nachgeben der Verbindung die Schienen widerstandslos nähern. Erst wenn die Schienen aufeinandertreffen, tritt wieder eine deutliche Verzögerung auf, die aber hinsichtlich ihrer Auswirkung auf die Kopfverletzung nicht mehr bedeutend ist, da die Bewegungsenergie des Kopfes beim ersten Aufschlag schon weitgehend abgebaut worden ist. Die auf diese Weise erzeugte zweistufige Verzögerung liefert gute HIC-Werte.

Die Nachgiebigkeit kann auf unterschiedlichste Arten realisiert werden. Es könnte z. B. an Schwachstellen im Material der Arme gedacht werden, so dass sich die Arme bei einer Belastung durchbiegen. Als besonders geeignet haben sich aber Systeme erwiesen, bei denen die Nachgiebigkeit durch den Bruch der Verbindung hervorgerufen wird. Dadurch ergibt sich eine eindeutig definierte Grenzbelastung.

Zur Realisierung einer solchen Bruchstelle werden die Streben so ausgebildet, dass sie überlappend flächig aneinander liegen und im Überlappungsbereich das Verbindungsgelenk aufweisen und von einem Scherbolzen durchdrungen sind. Ein solcher Aufbau ist relativ einfach zu bewerkstelligen und erfüllt doch die vorgesehene Funktion in eindeutiger Weise.

Damit die Stoßkräfte definiert auf die Streben übertragen werden, ist ein Druckstück an der Schiene zur Befestigung der Fronthaube vorgesehen. Diese ist an einer der Streben des zweiteiligen Armes anlegbar und leitet die auf die Fronthaube wirkenden Stoßkräfte auf einen bestimmten Punkt der Strebe im Abstand zur gelenkigen Verbindung mit der anderen Strebe, so dass der Scherbolzen, der einen anderen Abstand zum Gelenk hat, in einem vorbestimmten Verhältnis zur Aufschlagkraft belastet ist. Die Anordnung des Druckstückes erfolgt dabei so, dass es sich beim Aufklappen der Fronthaube vom zweiteiligen Arm entfernt.

Prinzipiell kann das Druckstück bei geschlossener Fronthaube unmittelbar an dem zweiteiligen Arm anliegen, wodurch das Druckstück gleichseitig die Aufgabe hat, die Schließstellung des Scharniers zu definieren.

Diese Aufgabe kann auch von einem anderen Anschlag wahrgenommen werden. In diesem Fall kann das Druckstück einen gewissen Abstand zur Strebe einnehmen, so dass es bei einem Kopfaufschlag mit einer Wucht auf die Strebe aufschlägt, was zur Folge hat, dass der Schervorgang ruckartig vonstatten geht und nur sehr kurze Zeit in Anspruch nimmt, so dass der Übergang zur Phase verminderter Verzögerung noch deutlicher bestimmt ist.

Eine besonders einfache Ausführung des Druckstückes erhält man, wenn dieses als Bolzen ausgebildet ist, der aus der Schiene zur Befestigung der Fronthaube seitlich hervorragt.

Damit das Druckstück bei der Übertragung der Stoßkraft nicht von der Strebe abrutscht, ist vorgesehen, dass es einen Kopf aufweist, der in einen Spalt zwischen den beiden Streben hineinragt und so die belastete Strebe hintergreift.

Um den Spalt zu realisieren hat die Strebe, an die das Druckstück anlegbar ist, zur Bildung des Spaltes einen gegenüber der anderen Strebe abgesetzten Endabschnitt.

Zur Verdeutlichung der Erfindung wird im Folgenden anhand eines Ausführungsbeispiels, dargestellt in drei Figuren, die Erfindung näher erläutert. Es zeigen
- Fig. 1: eine Seitenansicht des erfindungsgemäßen Scharniers in der Normalposition,
- Fig. 2: einen Schnitt entlang der Linie II - II der Figur 1,
- Fig. 3: das Scharnier gemäß der Figur 1 nach Ausführung eines Kopfaufschlagsimulationstests.

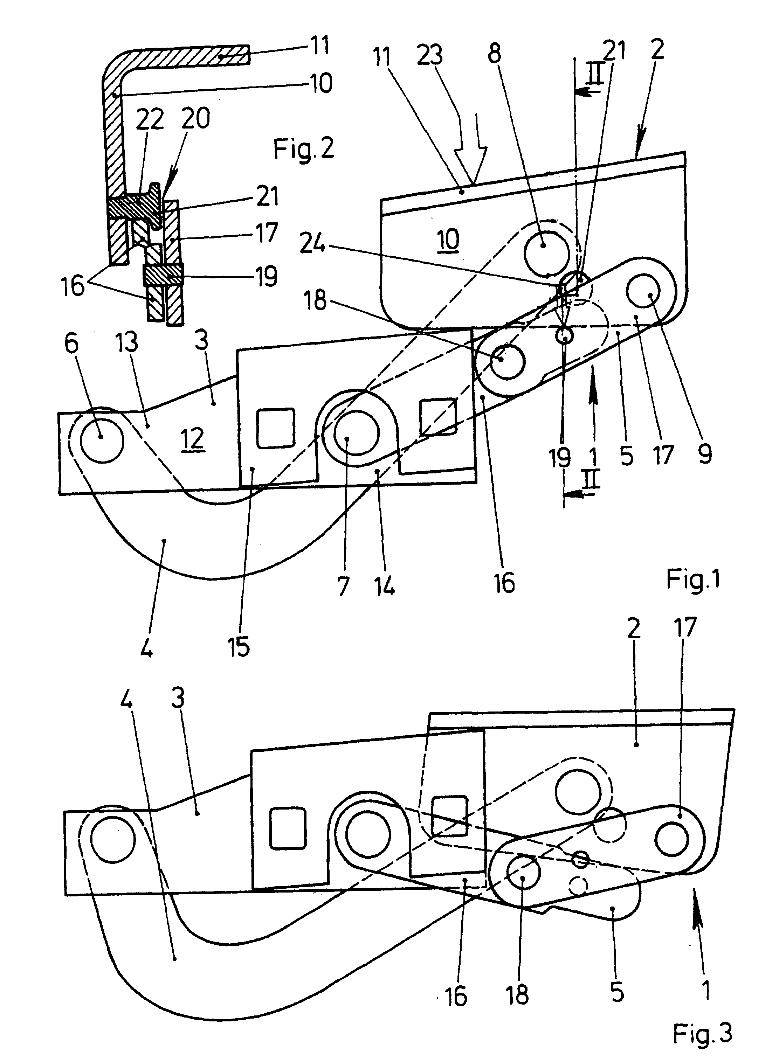

Zunächst wird auf die Figuren 1 und 2 Bezug genommen. Figur 1 zeigt in einer Seitenansicht ein Doppelarmgelenkscharnier 1. Dieses besteht aus einer oberen Schiene 2 und einer unteren Schiene 3. Die obere Schiene 2 wird mit einer hier nicht dargestellten Fronthaube verschraubt, verschweißt oder einstückig ausgeführt. Die untere Schiene 3 wird mit einer nicht näher dargestellten Karosseriestrebe verschraubt. Die beiden Schienen 2, 3 sind über einen langen Arm 4 und einen kurzen Arm 5 gelenkig miteinander verbunden. Dazu ist jeder Arm 4, 5 sowohl an der oberen als auch an der unteren Schiene in Gelenken 6, 7, 8, 9 drehbar gelagert. Die obere Schiene 2 besteht aus einem senkrechten Abschnitt 10 zur Aufnahme der Gelenke 8, 9 und einem waagrechten Abschnitt 11, an dem die Fronthaube befestigt wird. Die untere Schiene 3 weist ebenfalls einen senkrechten Abschnitt 12 auf mit zwei senkrecht zur Bildebene gegeneinander versetzten Bereiche 13, 14, wobei der eine Bereich 13, an dem der lange Arm 4 in einem Gelenk 6 drehbar gelagert ist, in der gleichen Ebene liegt wie der senkrechte Abschnitt 10 der oberen Schiene 2, und der andere Bereich 14, der das Gelenk 7 für den kurzen Arm 5 aufnimmt, dem gegenüber versetzt ist. An dem zuletzt genannten Bereich 14 ist ein Bügel 15 angesetzt, mit dem die untere Schiene 3 an einer Karosseriestrebe befestigt werden kann.

Gemäß der Darstellung befindet sich der lange Arm 4 hinter den senkrechten Abschnitten 10, während der kurze Arm 5 davor liegt. Der kurze Arm 5 ist zweiteilig ausgeführt und besteht aus zwei Streben 16, 17, die über ein Verbindungsgelenk 18 gelenkig miteinander verbunden sind. Dieses Verbindungsgelenk 18 befindet sich etwa auf halbem Abstand zwischen den beiden Gelenken 7, 9 an den Schienen 2, 3. Die untere Strebe 16, die gelenkig mit der unteren Schiene 3 verbunden ist, ist über das Verbindungsgelenk 18 hinaus verlängert und liegt in diesem Bereich flächig an der oberen Strebe 17 an, wobei in diesem Bereich die beiden Streben 16, 17 von einem Scherbolzen 19 durchdrungen sind.

Die untere Strebe 16 ist über den Scherbolzen 19 hinaus weiter verlängert, und zwar stufig von der oberen Strebe 17 abgesetzt, was besonders gut in der Figur 2 zu erkennen ist. Dadurch bildet sich zwischen den beiden Streben 16, 17 ein Spalt 20.

In diesen Spalt 20 greift ein Kopf 21 eines als Bolzen ausgebildeten Druckstückes 22 ein, der zur Übertragung von Kräften auf den kurzen Arm 5 dient. Das Druckstück 22 ist fest mit dem senkrechten Abschnitt 10 der oberen schiene 2 verbunden und ragt senkrecht vor.

Der Scherbolzen 19 verbindet die beiden Streben 16, 17 des kurzen Armes 5 starr miteinander, so dass dieser wie ein einteiliger Arm funktioniert und das Doppelarmgelenkscharnier 1 bestimmungsgemäß arbeitet. Auch bei statischen Kräften im Normalbereich sind die Kräfte, die über das Druckstück 22 auf den kurzen Arm 5 ausgeübt werden, nicht so hoch, dass diese starre Verbindung brechen würde.

Im Falle eines Kopfaufpralls übersteigen die ausgeübten Kräfte aber die Schergrenze, bei dem der Scherbolzen 19 abschert, so dass die Verbindung freigegeben wird. Wenn nämlich eine Stoßkraft gemäß dem Pfeil 23 auf die obere Schiene 2 ausgeübt wird, wird diese über das Druckstück 22 auf den kurzen Arm 5 und von dort entsprechend der wirksamen Hebelarme gemäß dem Pfeil 24 auf den Scherbolzen 19 übertragen.

In dem gezeigten Ausführungsbeispiel liegt das Druckstück 22 unmittelbar an der unteren Strebe 16 des kurzen Armes 5 an. Hier kann aber auch ein kleiner Abstand vorgesehen werden, um die Kraftübertragung mit einem gewissen Schwung erfolgen zu lassen. Der die untere Strebe 16 hintergreifende Kopf 21 verhindert, dass das Druckstück 22 dabei von der Strebe 16 abrutscht, wodurch die Kraftübertragung vereitelt wäre.

Wird innerhalb einer stoßartigen Belastung eine Grenzbelastung erreicht, bei der der Scherbolzen 19 abschert, so wird die starre Verbindung zwischen den beiden Streben 16, 17 aufgehoben und diese können sich um das Verbindungsgelenk 18 gegeneinander verdrehen. Dies ermöglicht es, dass die obere Schiene 2 nach unten absacken kann, wie dies in Figur 3 dargestellt ist. Dabei stellt das Scharnier der Bewegung keinen Widerstand entgegen, so dass die Kopfverzögerung lediglich aus einer Verformung der Haube bzw. aus einer Verformung von Stützelementen außerhalb des Scharniers herrührt. Diese werden aber so gestaltet, dass die Verzögerung nur gering ist. Erst wenn das Scharnier vollständig kollabiert ist, wie dies in Figur 3 dargestellt ist, und die obere Strebe 17 auf der unteren Strebe 16 aufliegt, ist wieder eine starre Verbindung zur Karosserie hergestellt, so dass erneut hohe Verzögerungen auftreten. Es stellt sich somit insgesamt ein zweistufiger Verzögerungsverlauf ein, nämlich eine erste Stufe bis zum Abscheren des Scherbolzens 19 und eine zweite Stufe nach dem Kollabieren des Scharniers, bei der insgesamt ein geringer HIC-Wert zu erwarten ist.

## Patentansprüche

1. Doppelarmgelenkscharnier für die Fronthaube eines Kraftfahrzeuges mit einem ersten und einem zweiten Arm (4, 5) zwischen einer mit der Fronthaube verbundenen Schiene (2) und einer mit der Karosserie verbundenen Schiene (3), wobei zumindest ein Arm (5) zweiteilig ausgeführt ist und aus zwei Streben (16, 17) besteht, die mittels eines Verbindungsgelenkes (18) gelenkig miteinander verbunden und mittels einer bei einer bestimmten Belastung nachgiebigen Verbindung starr aneinander befestigt sind, so dass beim Brechen der Verbindung in Folge einer stoßartigen Belastung die Schienen (2, 3) sich im Wesentlichen widerstandslos nähern, wobei ein Druckstück (22) vorhanden ist, das an einer der Streben (17) anlegbar ist, **dadurch gekennzeichnet, dass** das Druckstück (22) einen Kopf (21) aufweist, der die von dem Druckstück belastete Strebe (16) hintergreift.

2. Doppelarmgelenkscharnier nach Anspruch 1, **dadurch gekennzeichnet, dass** der Kopf (21) in einen Spalt (20) zwischen den beiden Streben (16, 17) des zweiteiligen Armes (5) hineinragt.

3. Doppelarmgelenkscharnier nach Anspruch 2, **dadurch gekennzeichnet, dass** zur Bildung des Spaltes (20) die Strebe (16), an die das Druckstück (22) anlegbar ist, einen gegenüber der anderen Strebe (17) abgesetzten Endabschnitt aufweist.

4. Doppelarmgelenkscharnier nach einem der vorhergehenden Ansprüche , **dadurch gekennzeichnet, dass** in der Schließposition der Fronthaube und des Doppelarmgelenkscharniers (1) zwischen der Strebe (16), an die das Druckstück (22) anlegbar ist, und dem Druckstück (22) ein Abstand besteht.

5. Doppelarmgelenkscharnier nach einem der vorhergehenden Ansprüche, **dadurch gekennzeichnet, dass** zur Bildung der nachgiebigen Verbindung die beiden Streben (16, 17) überlappend flächig aneinander liegen und im Überlappungsbereich das Verbindungsgelenk (18) aufweisen und dass die beiden Streben (16, 17) von einem Scherbolzen (19) durchdrungen sind.

6. Doppelarmgelenkscharnier nach einem der vorhergehenden Ansprüche, **dadurch gekennzeichnet, dass** das Druckstück (22) ein Bolzen ist, der aus der Schiene (2) zur Befestigung der Fronthaube seitlich hervorragt.

## Claims

1. Double-armed hinge for the front bonnet of a motor vehicle with a first and a second arm (4, 5) between a bar (2) connected to the front bonnet and a bar (3) connected to the body, wherein at least one arm (5) is constructed in two parts and consists of two struts (16, 17) which are pivotably connected to each other by means of a connecting joint (18) and rigidly attached to each other by means of a connection which yields under a given load so that, when the connection breaks as a result of a sudden load, the bars (2, 3) come close to each other substantially without resistance, wherein a thrust piece (22) is provided which is to be applied to one of the struts (16, 17), **characterised in that** the thrust piece (22) has a head (21) which grips behind the strut (16) which is applied to by the thrust piece (22).

2. Double-armed hinge according to claim 1, **characterised in that** the head (21) penetrates into a gap (20) between the two struts (16, 17) of the two-part arm (5).

3. Double-armed hinge according to claim 2, **characterised in that**, to form the gap (20), the strut (16) to which the thrust piece (22) can be applied comprises an end portion which is offset with respect to the other strut (17).

4. Double-armed hinge according to one of the preceding claims, **characterised in that** in the closed position of the front bonnet and of the double-arm hinge (1 ) there is a space between the strut (16) to which the thrust piece (22) can be applied and the thrust piece (22).

5. Double-armed hinge according to any of the preceding claims, **characterised in that** for defining of the yielding connection the two struts (16, 17) lie against each other, in overlapping planar relationship, and in the overlap region comprise the connecting joint (18) and that the two struts (16, 17) have a shear pin (19) passing through them.

6. Double-armed hinge according to any of the preceding claims, **characterised in that** the thrust piece (22) is a bolt which protrudes laterally from the bar (2) for attachment of the front bonnet.

## Revendications

1. Charnière articulée à double bras pour le capot avant d'un véhicule automobile, laquelle charnière comporte des premier et deuxième bras (4, 5) entre une glissière (2) raccordée au capot avant et une glissière (3) raccordée à la carrosserie, au moins un bras (5) étant réalisé en deux parties et étant constitué de deux montants (16, 17) qui sont reliés entre eux de façon articulée par une liaison articulée (18) et qui sont fixés rigidement l'un à l'autre par une liaison qui est flexible sous une contrainte déterminée de sorte que, en cas de rupture de la liaison à la suite d'une contrainte impulsionnelle, les glissières (2, 3) se rapprochent sensiblement sans résistance, un élément d'appui étant présent qui peut être appliqué sur l'un des montants (17), **caractérisé en ce que** l'élément d'appui (22) comporte une tête (21) qui s'engage en arrière du montant (16) contraint par l'élément d'appui.

2. Charnière articulée à double bras selon la revendication 1, **caractérisée en ce que** la tête (21) fait saillie dans une fente (20) ménagée entre les deux montants (16, 17) du bras en deux parties (5).

3. Charnière articulée à double bras selon la revendication 2, **caractérisée en ce que**, pour former la fente (20), le montant (16), sur lequel peut être appliqué l'élément d'appui (22), comporte une portion d'extrémité décalée par rapport à l'autre montant (17).

4. Charnière articulée à double bras selon l'une des revendications précédentes, **caractérisée en ce que**, dans la position de fermeture du capot avant et de la charnière articulée à double bras (1), une distance est ménagée entre l'élément d'appui (22) et le montant (16) sur lequel peut être appliqué l'élément d'appui (22).

5. Charnière articulée à double bras selon l'une des revendications précédentes, **caractérisée en ce que**, pour former la liaison flexible, les deux montants (16, 17) sont placés à plat et à recouvrement l'un sur l'autre et comportent la liaison articulée (18) dans la région de recouvrement et **en ce que** les deux montants (16, 17) sont traversés par un boulon de cisaillement (19).

6. Charnière articulée à double bras selon l'une des revendications précédentes, **caractérisée en ce que** l'élément d'appui (22) est un boulon qui fait saillie latéralement de la glissière (2) pour la fixation du capot avant.
